(19)

Europäisches
Patentamt
European
Patent Office
Office européen
des brevets

(11)  **EP 4 650 594 A1**

(12)  **EUROPEAN PATENT APPLICATION**
published in accordance with Art. 153(4) EPC

(43) Date of publication:
**19.11.2025  Bulletin 2025/47**

(21) Application number: **23915546.8**

(22) Date of filing: **07.07.2023**

(51) International Patent Classification (IPC):
**F03D 7/00** (2006.01)

(52) Cooperative Patent Classification (CPC):
Y02E 10/72

(86) International application number:
**PCT/CN2023/106284**

(87) International publication number:
**WO 2024/148783 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **12.01.2023  CN 202310063820**

(71) Applicant: **Beijing Goldwind Science & Creation
Windpower Equipment Co. Ltd.
Beijing 100176 (CN)**

(72) Inventors:
• **LIU, Mang
  Beijing 100176 (CN)**
• **ZHOU, Jie
  Beijing 100176 (CN)**
• **DING, Guodong
  Beijing 100176 (CN)**

(74) Representative: **Hoffmann Eitle
Patent- und Rechtsanwälte PartmbB
Arabellastraße 30
81925 München (DE)**

(54)  **VARIABLE-PITCH CONTROL METHOD AND DEVICE FOR WIND TURBINE GENERATOR SET**

(57)  Provided are a variable-pitch control method and device for a wind turbine generator set. The variable-pitch control method comprises: identifying a current wind condition on the basis of operation data and wind parameters of a wind turbine generator set; in response to the current wind condition being a preset wind condition, acquiring an actual pitch angle and a target minimum pitch angle of the wind turbine generator set; setting a minimum pitch angle of the wind turbine generator set on the basis of the actual pitch angle and the target minimum pitch angle; and controlling the operation of the wind turbine generator set on the basis of the minimum pitch angle.

EP 4 650 594 A1

```
┌─────────────────────────────────────────────────────────────┐
│ A current wind condition is identified based on operating     │──── S301
│ data and wind parameters of the wind turbine                  │
└─────────────────────────────────────────────────────────────┘
                            │
                            ▼
┌─────────────────────────────────────────────────────────────┐
│ The actual pitch angle and the target minimum pitch angle of  │
│ the wind turbine are acquired in response to the current wind  │──── S302
│ condition being the preset wind condition                     │
└─────────────────────────────────────────────────────────────┘
                            │
                            ▼
┌─────────────────────────────────────────────────────────────┐
│ The minimum pitch angle of the wind turbine is set based on   │──── S303
│ the actual pitch angle and the target minimum pitch angle     │
└─────────────────────────────────────────────────────────────┘
                            │
                            ▼
┌─────────────────────────────────────────────────────────────┐
│ Operation of the wind turbine is controlled based on the      │──── S304
│ minimum pitch angle                                           │
└─────────────────────────────────────────────────────────────┘
```

**FIG. 3**

## Description

## FIELD

The present disclosure relates to the technical field of wind power generation, and in particular to a variable-pitch control method and apparatus for a wind turbine.

BACKGROUND

In variable-pitch control of a wind turbine, a blade angle is determined based on external wind speed and turbine vibration. By adjusting a blade pitch angle, on the one hand, continuous power output from the wind turbine can be guaranteed, and on the other hand, windward area of the wind turbine can be changed to ensure vibration amplitude or load of the wind turbine within a reasonable range. Current technologies focus on reducing vibration and load by increasing the pitch angle and variable-pitch speed of the wind turbine, aiming to avoid the occurrence of extreme events such as tower strike as much as possible.

The difficulty in reducing the vibration and the load of the wind turbine under a complex wind condition in practice lies in large fluctuation in wind speed over short periods of the complex wind condition, and there is a certain delay between a response of a variable-pitch mechanism and determination of a pitch command. Existing technical solutions are unable to achieve smooth and rapid pitch adjustment under the complex wind condition. Therefore, it is crucial to develop a variable-pitch control method based on operational parameters such as nacelle wind speed, wind direction, and a pitch angle in current pitch control under the complex wind condition.

## SUMMARY

Variable-pitch control method and apparatus for a wind turbine are provided according to the exemplary embodiments of the present disclosure, so as to improve the effect of the variable-pitch control.

A variable-pitch control method for a wind turbine is provided according to an exemplary embodiment of the present disclosure. The variable-pitch control method comprises: identifying a current wind condition based on operating data and wind parameters of the wind turbine; acquiring an actual pitch angle and a target minimum pitch angle of the wind turbine in response to the current wind condition being a preset wind condition; setting a minimum pitch angle of the wind turbine based on the actual pitch angle and the target minimum pitch angle; and controlling operation of the wind turbine based on the minimum pitch angle.

A variable-pitch control apparatus for a wind turbine is provided according to an exemplary embodiment of the present disclosure. The variable-pitch control apparatus comprises: a wind condition identifying unit, configured to identify a current wind condition based on operating data and wind parameters of the wind turbine; an angle acquiring unit, configured to acquire an actual pitch angle and a target minimum pitch angle of the wind turbine in response to the current wind condition being a preset wind condition; an angle setting unit, configured to set a minimum pitch angle of the wind turbine based on the actual pitch angle and the target minimum pitch angle; and a controlling unit, configured to control operation of the wind turbine based on the minimum pitch angle.

A wind farm is provided according to an exemplary embodiment of the present disclosure. The wind farm comprises a variable-pitch control apparatus for a wind turbine described in the present disclosure.

A computer-readable storage medium is provided according to an exemplary embodiment of the present disclosure, on which a computer program is stored. The computer program, when being executed, performs a variable-pitch control method for a wind turbine according to the exemplary embodiment of the present disclosure.

A computing device is provided according to an exemplary embodiment of the present disclosure. The computing device comprises: at least one processor; at least one memory, on which a computer program is stored. The computer program, when executed by the processor, performs a variable-pitch control method for a wind turbine according to the exemplary embodiment of the present disclosure.

A computer program product is provided according to an exemplary embodiment of the present disclosure. Instructions in the computer program product can be executed by a processor of a computing device to complete a variable-pitch control method for a wind turbine according to the exemplary embodiment of the present disclosure.

The variable-pitch control method and apparatus for a wind turbine are provided according to the exemplary embodiments of the present disclosure. The current wind condition is identified based on the operating data and the wind parameters of the wind turbine, the actual pitch angle and the target minimum pitch angle of the wind turbine is acquired in response to the current wind condition being the preset wind condition, the minimum pitch angle of the wind turbine is set based on the actual pitch angle and the target minimum pitch angle, and the operation of the wind turbine is controlled based on the minimum pitch angle, thereby improving the effect of variable-pitch control.

Additional aspects and/or advantages of the overall concept of the present disclosure are partially explained in the following description. The other parts of the present disclosure will be clear through the description or can be learned through implementations of the overall concept of the present disclosure.

**BRIEF DESCRIPTION OF THE DRAWINGS**

The above and other objectives and features of the embodiments of the present disclosure will be clearer from the following description in conjunction with the drawings that exemplarily illustrate the embodiments.

FIG. 1 is a schematic diagram showing variable-pitch control of a wind turbine under a complex wind condition;

FIG. 2 is another schematic diagram of variable-pitch control of a wind turbine under a complex wind condition;

FIG. 3 is a flow chart of a control method for variable-pitch of a wind turbine according to an exemplary embodiment of the present disclosure.

FIG. 4 is a schematic diagram of variable-pitch control of a wind turbine according to an exemplary embodiment of the present disclosure;

FIG. 5 is a block diagram of a control apparatus for variable-pitch of a wind turbine according to an exemplary embodiment of the present disclosure; and

FIG. 6 is a schematic diagram of a computing device according to an exemplary embodiment of the present disclosure.

**DETAILED DESCRIPTION**

Reference is made in detail to the exemplary embodiments of the present disclosure, and examples of the embodiments are shown in the drawings, where the same reference numbers always represent the same components. The embodiments are illustrated hereinafter with reference to the drawings to explain the present disclosure.

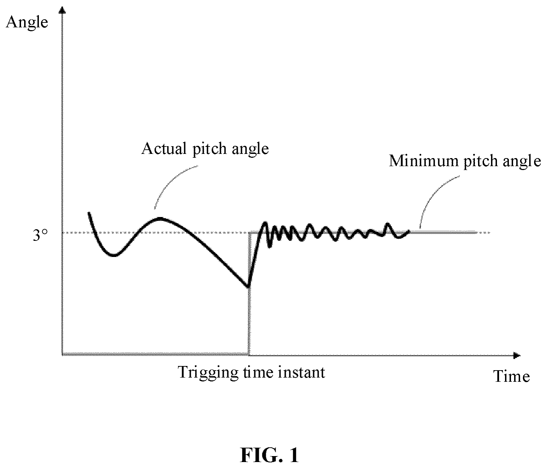

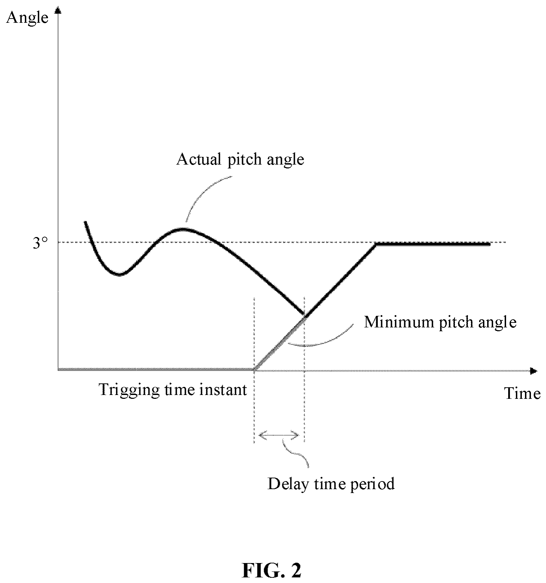

In a related technology, as shown in FIG. 1, in a case that a wind turbine identify a complex wind condition, a minimum pitch angle increases from an previous pitch angle to a new pitch angle and an actual pitch angle rises rapidly to the new pitch angle. The problem in the technical solution shown in FIG. 1 is that the actual pitch angle flutters at the position of the new pitch angle, and a system will be subject to shock and will be instable. In another related technology, as shown in FIG. 2, the minimum pitch angle increases from the previous pitch angle to the new pitch angle at a certain slope in a case that the wind turbine identify the complex wind condition. The problem in the technical solution shown in FIG. 2 is that the actual pitch angle keeps decreasing and drops to a low value after the complex wind condition is identified, causing the reduction of tower clearance and greatly increasing the probability of extreme events such as tower strike.

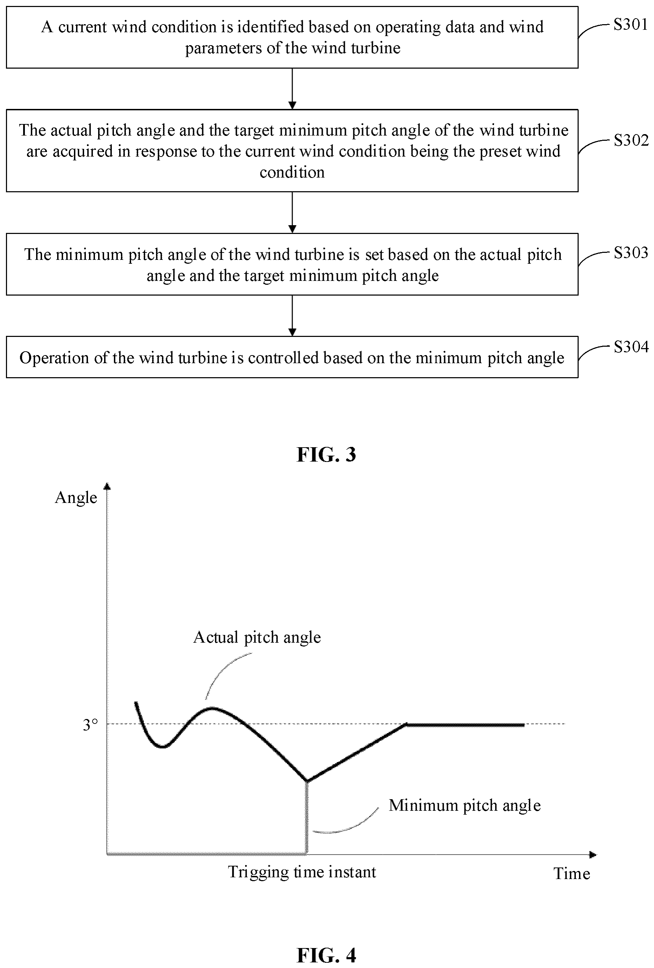

FIG. 3 is a flow chart of a variable-pitch control method for a wind turbine according to an embodiment of the present disclosure. FIG. 4 is a schematic diagram of variable-pitch control of a wind turbine according to an embodiment of the present disclosure. In FIG. 4, for convenient description, an actual pitch angle is set to 0° and a target minimum pitch angle is set to 3° without loss of generality.

Reference is made to FIG. 3, in step S301, a current wind condition is identified based on operating data and wind parameters of the wind turbine.

In the embodiment of the present disclosure, a preset wind condition includes: a wind condition causing at least one of: vibration of the wind turbine exceeding a limit, generator overspeed of the wind turbine, a cumulative increment of nacelle wind speed of the wind turbine exceeding standard, and a cumulative increment of nacelle wind direction of the wind turbine exceeding standard.

In the embodiment of the present disclosure, when the current wind condition is identified based on the operating data and the wind parameters of the wind turbine, a wind-condition identification feature of the wind turbine is firstly calculated based on the operating data and the wind parameters of the wind turbine, and then the current wind condition is identified based on the wind-condition identification feature.

In the embodiment of the present disclosure, the wind-condition identification feature includes at least one of a first identification feature, a second identification feature, a third identification feature, and a fourth identification feature.

In the embodiment of the present disclosure, the current wind condition can be identified as the preset wind condition in a case that the first identification feature indicates that the cumulative increment of nacelle wind speed of the wind turbine is greater than or equal to a first threshold, and/or the second identification feature indicates that the cumulative increment of nacelle wind direction of the wind turbine is greater than or equal to a second threshold, and/or the third identification feature indicates that the vibration of the wind turbine is greater than or equal to a third threshold, and/or the fourth identification feature indicates that the generator speed of the wind turbine is greater than or equal to a fourth threshold.

In the embodiment of the present disclosure, the first identification feature indicates whether the cumulative increment of nacelle wind speed of the wind turbine is greater than or equal to the first threshold, the second identification feature indicates whether the cumulative increment of nacelle wind direction of the wind turbine is greater than or equal to the second threshold, the third identification feature indicates whether the vibration of the wind turbine is greater than or equal to the third threshold, and the fourth identification feature indicates whether the generator speed of the wind turbine is greater than or equal to the fourth threshold.

For example, when the preset wind condition is a wind condition (also called a complex wind condition) which includes the cumulative increment of nacelle wind speed of the wind turbine exceeding the standard and the cumulative increment of nacelle wind direction of the wind turbine exceeding the standard, two features related to the identification of the complex wind condition are: the first identification feature (also called feature A) and the second identification feature (also called feature B).

The processing of the first identification feature includes cumulative increment calculation and threshold comparison of nacelle wind speed. The cumulative increment calculation of nacelle wind speed refers to all differences, each being a wind speed value $V_i$ within a time period T minus the first wind speed value $V_{(-T)}$ in the period, are accumulated, and then an accumulated value is multiplied by a sampling period of the wind speed in the time period, to obtain the cumulative increment of nacelle wind speed. A specific formula is as follows:

$$S = \left( \sum_{i=-T}^{0} \left( V_i - V_{(-T)} \right) \right) * \Delta t$$

where S is the cumulative incremental of nacelle wind speed in the time period T; $V_i$ is a wind speed value at any time in the time period T; $V_{(-T)}$ is the first wind speed value in the time period T; T is time length for calculating the cumulative incremental; $\Delta t$ is a time interval between adjacent data points in the time period T.

The threshold comparison refers to comparing the cumulative increment of nacelle wind speed with a threshold. The first identification feature is set to True if the cumulative increment of nacelle wind speed is greater than or equal to the threshold, otherwise the first identification feature is set to False.

The processing of the second identification feature includes cumulative increment calculation and threshold comparison of nacelle wind direction. Since the processing manner of the second identification feature is identical with the processing manner of the first identification feature, the processing method of the second identification feature is not repeated here.

The current wind condition is determined as the preset wind condition in a case that at least one of the first identification feature and the second identification feature is True; otherwise, the current wind condition is determined as a non-preset wind condition.

In step S302, the actual pitch angle and the target minimum pitch angle of the wind turbine are acquired in response to the current wind condition being the preset wind condition.

In step S303, the minimum pitch angle of the wind turbine is set based on the actual pitch angle and the target minimum pitch angle.

In the embodiment of the present disclosure, a smaller one of the actual pitch angle and the target minimum pitch angle is set as the minimum pitch angle when the minimum pitch angle of the wind turbine is set based on the actual pitch angle and the target minimum pitch angle.

In step S304, operation of the wind turbine is controlled based on the minimum pitch angle. In order to achieve fast and stable response of the wind turbine under the preset wind condition and reduce the system impact caused by the pitch change, when the wind turbine identifies the preset wind condition, the operation of the wind turbine is immediately controlled based on the minimum pitch angle, i.e., the minimum pitch angle increasing control is performed. As shown in FIG. 4, the minimum pitch angle is set to the smaller one of the target minimum pitch angle and the actual pitch angle when the wind turbine identifies the preset wind condition, and then the minimum pitch angle is increased to the target minimum pitch angle according to a certain slope, thereby effectively avoiding system impact and the actual pitch angle being too low.

In the embodiment of the present disclosure, when the operation of the wind turbine is controlled based on the minimum pitch angle, firstly if the minimum pitch angle less than the target minimum pitch angle, the minimum pitch angle is increased to the target minimum pitch angle in a predetermined manner and the operation of the wind turbine is controlled at the target minimum pitch angle within a preset time period; and then, the operation of the wind turbine is controlled at the target minimum pitch angle within the preset time period if the minimum pitch angle equal to the target minimum pitch angle. For example, initially, in a case that the target minimum pitch angle is 3°, it is determined whether the minimum pitch angle is greater than 3°, the minimum pitch angle is increased according to the certain slope if the minimum pitch angle is less than 3°; otherwise, the minimum pitch angle is maintained at 3° if the minimum pitch angle is greater than or equal to 3°.

In the embodiment of the present disclosure, the predetermined manner includes a linearly-increasing manner or a stepped-increasing manner.

In the embodiment of the present disclosure, the variable-pitch control method further includes: the minimum pitch angle is changed to a predetermined value when the preset wind condition is not identified within the preset time period, where the predetermined value is less than a target pitch angle. For example, if the wind turbine identifies the preset wind condition within 3 minutes, the minimum pitch angle is maintained at 3° within 3 minutes as a delay; the minimum pitch angle is set to 0° if the preset wind condition is not identified within 3 minutes.

According to the embodiment of the present disclosure, the variable-pitch control method and apparatus for a wind turbine achieve smooth and rapid pitch change for the preset wind condition, and avoid flutter caused by impact during the operation of variable-pitch control; and solve the system impact problem caused by minimum pitch angle jump in the minimum pitch angle increasing scheme of the wind turbine (or the clearance is difficult to be timely increased caused by slowly increasing the minimum pitch angle and the resulting risk of tower strike) under the preset wind condition; and achieve smooth and rapid increase the minimum pitch angle under the preset wind condition, effectively reduce the load of the wind turbine and ensure the tower clearance, thereby reducing the risk of tower strike. In addition, the variable-pitch control method and apparatus for a wind turbine according to the embodiment of the present disclosure can be used for wind turbines with different models, and achieve zero-delay variable pitch protection.

In addition, a computer-readable storage medium is provided according to an embodiment of the present disclosure, on which a computer program is stored. The computer program, when being executed, performs a variable-pitch control method for a wind turbine according to the embodiment of the present disclosure.

In the embodiment of the present disclosure, the computer-readable storage medium may carry one or more programs, and the following steps can be implemented when the computer program is executed: a current wind condition is identified based on operating data and wind parameters of a wind turbine; an actual pitch angle and a target minimum pitch angle of the wind turbine set are acquired in response to the current wind condition being a preset wind condition; a minimum pitch angle of the wind turbine is set based on the actual pitch angle and the target minimum pitch angle; operation of the wind turbine is controlled based on the minimum pitch angle, thereby improving the effect of variable-pitch control.

The computer-readable storage medium may be, but is not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer disk, a hard disk, a random access memory (RAM), a read only memory (ROM), an erasable programmable read only memory (EPROM or a flash memory), an optical fiber, a portable compact disk read only memory (CD-ROM), an optical storage device, a magnetic storage device, or any suitable combination of the above. In the embodiments of the present disclosure, the computer-readable storage medium may be any tangible medium that contains or stores a computer program, and the computer program may be used by in combination with an instruction execution system, apparatus, or device. The computer program stored in the computer-readable storage medium may be transmitted by any suitable medium, including but not limited to a wire, an optical cable, Radio Frequency (RF), or any suitable combination of the above. The computer-readable storage medium may be arranged in any apparatus, or may be separate without being arranged into the apparatus.

In addition, a computer program product is also provided according to an exemplary embodiment of the present disclosure. Instructions in the computer program product can be executed by a processor of a computing device, completing the variable-pitch control method for a wind turbine according to an exemplary embodiment of the present disclosure.

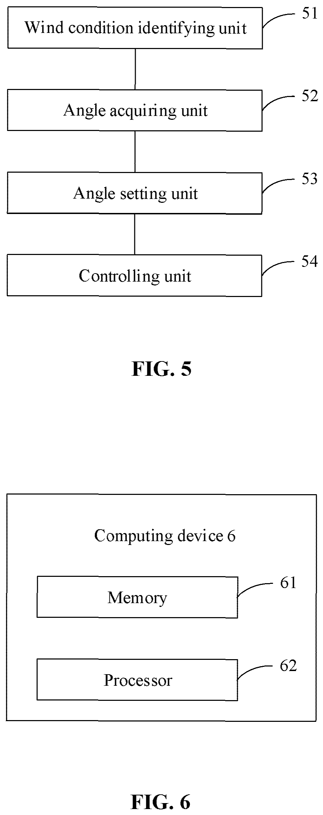

The variable-pitch control method for a wind turbine according to the exemplary embodiment of the present disclosure is described above in conjunction with FIG. 3 and FIG. 4. Hereinafter, a variable-pitch control apparatus for a wind turbine and units of the variable-pitch control apparatus according to the exemplary embodiment of the present disclosure is described in conjunction with FIG. 5.

FIG. 5 shows a block diagram of a variable-pitch control apparatus for a wind turbine according to an exemplary embodiment of the present disclosure.

Reference is made to FIG. 5, the variable-pitch control apparatus for a wind turbine includes a wind condition identifying unit 51, an angle acquiring unit 52, an angle setting unit 53, and a controlling unit 54.

The wind condition identifying unit 51 is configured to identify a current wind condition based on operating data and wind parameters of the wind turbine.

In the exemplary embodiment of the present disclosure, a preset wind condition includes: a wind condition causing at least one of: vibration of the wind turbine exceeding a limit, generator overspeed of the wind turbine, a cumulative increment of nacelle wind speed of the wind turbine exceeding standard, and a cumulative increment of nacelle wind direction of the wind turbine exceeding standard.

In the exemplary embodiment of the present disclosure, the wind condition identifying unit 51 is configured to: calculate a wind-condition identification feature of the wind turbine based on the operating data and the wind parameters of the wind turbine; and identify the current wind condition based on the wind-condition identification feature.

In the exemplary embodiment of the present disclosure, the wind-condition identification feature includes at least one of a first identification feature, a second identification feature, a third identification feature, and a fourth identification feature. The current wind condition is identified as the preset wind condition in a case that the first identification feature indicates that the cumulative increment of nacelle wind speed of the wind turbine is greater than or equal to a first threshold, and/or the second identification feature indicates that the cumulative increment of nacelle wind direction of the wind turbine is greater than or equal to a second threshold, and/or the third identification feature indicates that the vibration of the wind turbine is greater than or equal to a third threshold, and/or the fourth identification feature indicates that the generator speed of the wind turbine is greater than or equal to a fourth threshold.

In the exemplary embodiment of the present disclosure, the first identification feature indicates whether the cumulative increment of nacelle wind speed of the wind turbine is greater than or equal to a first threshold, the second identification feature indicates whether the cumulative increment of nacelle wind direction of the wind turbine is greater than or equal to a second threshold, the third identification feature indicates whether the vibration of the wind turbine is greater than or equal to a second threshold, and the fourth identification feature indicates whether the generator speed of the wind turbine is greater than or equal to a fourth threshold.

The angle acquiring unit 52 is configured to acquire an actual pitch angle and a target minimum pitch angle of the wind turbine in response to the current wind condition being the preset wind condition.

The angle setting unit 53 is configured to set a minimum pitch angle of the wind turbine based on the actual pitch angle and the target minimum pitch angle.

In the exemplary embodiment of the present disclosure, the angle setting unit 53 is configured to set a smaller one of the actual pitch angle and the target minimum pitch angle as the minimum pitch angle.

The controlling unit 54 is configured to control operation of the wind turbine based on the minimum pitch angle.

In the exemplary embodiment of the present disclosure, the controlling unit 54 is configured to: in a case that the minimum pitch angle is less than the target minimum pitch angle, increase the minimum pitch angle to the target minimum pitch angle in a predetermined manner, and control the operation of the wind turbine at the target minimum pitch angle within a preset time period; and in a case that the minimum pitch angle equal to the target minimum pitch angle, control the operation of the wind turbine at the target minimum pitch angle within the preset time period.

In the exemplary embodiment of the present disclosure, the predetermined manner includes a linearly-increasing manner or a stepped-increasing manner.

In the exemplary embodiment of the present disclosure, the variable-pitch control apparatus also includes: a predetermined setting unit (not shown), configured to set the minimum pitch angle as a predetermined value in a case that the preset wind condition is not identified within the preset time period, where the predetermined value is less than the target minimum pitch angle.

The variable-pitch control apparatus for a wind turbine according to the exemplary embodiment of the present disclosure is described above in conjunction with FIG. 5. Hereinafter, a computing device according to an exemplary embodiment of the present disclosure is described with reference to FIG. 6.

FIG. 6 shows a schematic diagram of a computing device according to an exemplary embodiment of the present disclosure.

Reference is made to FIG. 6, the computing device according to an embodiment of the present disclosure includes a memory 61 and a processor 62. The memory 61 stores a computer program. The computer program, when executed by the processor 62, performs the variable-pitch control method for a wind turbine according to any one of the embodiments of the present disclosure.

In the exemplary embodiment of the present disclosure, the computer program, when being executed by the processor 62, perform the following steps: identifying a current wind condition based on operating data and wind parameters of the wind turbine; acquiring an actual pitch angle and a target minimum pitch angle of the wind turbine in response to the current wind condition being a preset wind condition; setting a minimum pitch angle of the wind turbine based on the actual pitch angle and the target minimum pitch angle; and controlling operation of the wind turbine based on the minimum pitch angle .

The computing device shown in FIG. 6 is only an example, and should not be a limitation to a function and application scope of the embodiments of the present disclosure.

The variable-pitch control method and apparatus for a wind turbine according to the exemplary embodiments of the present disclosure are described above in conjunction with FIG. 1 to FIG. 6. However, it should be understood that the variable-pitch control apparatus for a wind turbine and units thereof shown in FIG. 5 may be respectively configured as software, hardware, firmware or any combination of the above items that perform specific functions. The computing device shown in FIG. 6 is not limited to include the components shown above, but may add or remove some components as needed, and the above components may also be combined.

According to the variable-pitch control method and apparatus for a wind turbine described in the exemplary embodiment of the present disclosure, the current wind condition is identified based on the operating data and the wind parameters of the wind turbine , and the actual pitch angle and the target minimum pitch angle of the wind turbine are obtained in response to the current wind condition being the preset wind condition, the minimum pitch angle of the wind turbine is set based on the actual pitch angle and the target minimum pitch angle, and operation of the wind turbine is controlled based on the minimum pitch angle, thereby improving the effect of variable pitch control.

Although the present disclosure is specifically shown and described with reference to exemplary embodiments thereof, those skilled in the art should understand that the present disclosure may be modified in forms and details without deviating from the spirit and the scope of the present disclosure as defined by the claims.

**Claims**

1. A variable-pitch control method for a wind turbine, comprising:

   identifying a current wind condition based on operating data and wind parameters of the wind turbine;
   acquiring an actual pitch angle and a target minimum pitch angle of the wind turbine in response to the current wind condition being a preset wind condition;
   setting a minimum pitch angle of the wind turbine based on the actual pitch angle and the target minimum pitch angle; and
   controlling operation of the wind turbine based on the minimum pitch angle.

2. The variable-pitch control method for a wind turbine according to claim 1, wherein the preset wind condition comprises a wind condition causing at least one of: vibration of the wind turbine exceeding a limit, generator overspeed of the wind turbine, a cumulative increment of nacelle wind speed of the wind turbine exceeding standard, and a cumulative increment of nacelle wind direction of the wind turbine exceeding standard.

3. The variable-pitch control method for a wind turbine according to claim 1, wherein identifying the current wind condition based on the operating data and the wind parameters of the wind turbine comprises:

   calculating a wind-condition identification feature of the wind turbine based on the operating data and the wind parameters of the wind turbine; and
   identifying the current wind condition based on the wind-condition identification feature.

4. The variable-pitch control method for a wind turbine according to claim 3, wherein the wind-condition identification feature comprises at least one of: a first identification feature, a second identification feature, a third identification feature, and a fourth identification feature, and
   the current wind condition is identified as the preset wind condition in a case that the first identification feature indicates that the cumulative increment of nacelle wind speed of the wind turbine is greater than or equal to a first threshold, and/or the second identification feature indicates that the cumulative increment of nacelle wind direction of the wind turbine is greater than or equal to a second threshold, and/or the third identification feature indicates that the vibration of the wind turbine is greater than or equal to a third threshold, and/or the fourth identification feature indicates that the generator speed of the wind turbine is greater than or equal to a fourth threshold.

5. The variable-pitch control method for a wind turbine according to claim 4, wherein setting the minimum pitch angle of the wind turbine based on the actual pitch angle and the target minimum pitch angle comprises:
   setting a smaller one of the actual pitch angle and the target minimum pitch angle as the minimum pitch angle.

6. The variable-pitch control method for a wind turbine according to claim 1, wherein controlling the operation of the wind turbine based on the minimum pitch angle comprises:

   in a case that the minimum pitch angle is less than the target minimum pitch angle, increasing the minimum pitch angle to the target minimum pitch angle in a predetermined manner, and controlling the operation of the wind turbine at the target minimum pitch angle within a preset time period; and
   in a case that the minimum pitch angle equal to the target minimum pitch angle, controlling the operation of the wind turbine at the target minimum pitch angle within the preset time period.

7. The variable-pitch control method for a wind turbine according to claim 6, further comprising:
   setting the minimum pitch angle as a predetermined value in a case that the preset wind condition is not identified within the preset time period, wherein the predetermined value is less than the target minimum pitch angle.

8. A variable-pitch control apparatus for a wind turbine, comprising:

   a wind condition identifying unit, configured to identify a current wind condition based on operating data and wind parameters of the wind turbine;
   an angle acquiring unit, configured to acquire an actual pitch angle and a target minimum pitch angle of the wind turbine in response to the current wind condition being a preset wind condition;
   an angle setting unit, configured to set a minimum pitch angle of the wind turbine based on the actual pitch angle and the target minimum pitch angle; and
   a controlling unit, configured to control operation of the wind turbine based on the minimum pitch angle.

9. The variable-pitch control apparatus for a wind turbine according to claim 8, wherein the wind condition identifying unit is configured to:

> calculate a wind-condition identification feature of the wind turbine based on the operating data and the wind parameters of the wind turbine; and identify the current wind condition based on the wind-condition identification feature, wherein the wind-condition identification feature comprises at least one of: a first identification feature, a second identification feature, a third identification feature, and a fourth identification feature, and
> the current wind condition is identified as the preset wind condition in a case that the first identification feature indicates that the cumulative increment of nacelle wind speed of the wind turbine is greater than or equal to a first threshold, and/or the second identification feature indicates that the cumulative increment of nacelle wind direction of the wind turbine is greater than or equal to a second threshold, and/or the third identification feature indicates that the vibration of the wind turbine is greater than or equal to a third threshold, and/or the fourth identification feature indicates that the generator speed of the wind turbine is greater than or equal to a fourth threshold.

**10.** The variable-pitch control apparatus for a wind turbine according to claim 8, wherein the controlling unit is configured to:

> in a case that the minimum pitch angle is less than the target minimum pitch angle, increase the minimum pitch angle to the target minimum pitch angle in a predetermined manner, and control the operation of the wind turbine at the target minimum pitch angle within a preset time period; and
> in a case that the minimum pitch angle equal to the target minimum pitch angle, control the operation of the wind turbine at the target minimum pitch angle within the preset time period.

**11.** The variable-pitch control apparatus for a wind turbine according to claim 10, further comprising:
a predetermined setting unit, configured to set the minimum pitch angle as a predetermined value in a case that the preset wind condition is not identified within the preset time period, wherein the predetermined value is less than the target minimum pitch angle.

**12.** A wind farm, comprising:
a variable-pitch control apparatus for a wind turbine in any one of claims 8 to 11.

**13.** A computer-readable storage medium, storing a computer program, wherein
the computer program, when being executed, performs a variable-pitch control method for a wind turbine according to any one of claims 1 to 7.

**14.** A computing device, comprising:

> at least one processor; and
> at least one memory, storing a computer program, wherein
> the computer program, when executed by the processor, performs a variable-pitch control method of a wind turbine according to any one of claims 1 to 7.

Angle

Actual pitch angle

Minimum pitch angle

3°

Trigging time instant

Time

**FIG. 1**

Angle

Actual pitch angle

3°

Minimum pitch angle

Trigging time instant

Time

Delay time period

**FIG. 2**

| | |
|---|---|
| A current wind condition is identified based on operating data and wind parameters of the wind turbine | S301 |
| The actual pitch angle and the target minimum pitch angle of the wind turbine are acquired in response to the current wind condition being the preset wind condition | S302 |
| The minimum pitch angle of the wind turbine is set based on the actual pitch angle and the target minimum pitch angle | S303 |
| Operation of the wind turbine is controlled based on the minimum pitch angle | S304 |

**FIG. 3**

**FIG. 4**

| Wind condition identifying unit | 51 |

| Angle acquiring unit | 52 |

| Angle setting unit | 53 |

| Controlling unit | 54 |

**FIG. 5**

Computing device 6

| Memory | 61 |

| Processor | 62 |

**FIG. 6**

## INTERNATIONAL SEARCH REPORT

| | International application No. |
|---|---|
| | **PCT/CN2023/106284** |

| A. | CLASSIFICATION OF SUBJECT MATTER |
|---|---|

F03D7/00(2006.01)i

According to International Patent Classification (IPC) or to both national classification and IPC

| B. | FIELDS SEARCHED |
|---|---|

Minimum documentation searched (classification system followed by classification symbols)

    IPC:F03D

Documentation searched other than minimum documentation to the extent that such documents are included in the fields searched

Electronic data base consulted during the international search (name of data base and, where practicable, search terms used)

    CNTXT, VCN, VEN, CJFD: 风况, 变桨, 桨距角, 节距角, 目标, 实际, 最小, 最小桨距角, 最优, wind, speed, torque, pitch angle, adjust+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116292080 A (BEIJING GOLDWIND SCIENCE & CREATION WINDPOWER EQUIPMENT CO., LTD.) 23 June 2023 (2023-06-23)<br>    claims 1-14, and figures 1-6 | 1-14 |
| Y | CN 111706464 A (XINJIANG GOLDWIND SCIENCE & TECHNOLOGY CO., LTD.) 25 September 2020 (2020-09-25)<br>    description, paragraphs 0026-0211, and figures 1-5 | 1-5, 8-9, 12-14 |
| Y | CN 108457798 A (INNER MONGOLIA GEOHO ENERGY EQUIPMENT CO., LTD.) 28 August 2018 (2018-08-28)<br>    description, paragraphs 0053-0094, and figures 1-7 | 1-5, 8-9, 12-14 |
| Y | CN 113931806 A (XINJIANG GOLDWIND SCIENCE & TECHNOLOGY CO., LTD.) 14 January 2022 (2022-01-14)<br>    description, paragraphs 0036-0100, and figures 1-7 | 2-5, 9 |
| A | CN 102797629 A (GUODIAN UNITED POWER TECHNOLOGY CO., LTD.) 28 November 2012 (2012-11-28)<br>    entire document | 1-14 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 September 2023** | **22 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/106284** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111075651 A (GUODIAN UNITED POWER TECHNOLOGY CO., LTD.) 28 April 2020 (2020-04-28) <br> entire document | 1-14 |
| A | CN 113027695 A (XINJIANG GOLDWIND SCIENCE & TECHNOLOGY CO., LTD.) 25 June 2021 (2021-06-25) <br> entire document | 1-14 |
| A | US 2009295159 A1 (ALLIANCE FOR SUSTAINABLE ENERGY L.L.C.) 03 December 2009 (2009-12-03) <br> entire document | 1-14 |

Form PCT/ISA/210 (second sheet) (July 2022)

International application No.

**PCT/CN2023/106284**

| Patent document cited in search report | | | Publication date (day/month/year) | Patent family member(s) | | | Publication date (day/month/year) |
|---|---|---|---|---|---|---|---|
| CN | 116292080 | A | 23 June 2023 | None | | | |
| CN | 111706464 | A | 25 September 2020 | None | | | |
| CN | 108457798 | A | 28 August 2018 | None | | | |
| CN | 113931806 | A | 14 January 2022 | WO | 2022001251 | A1 | 06 January 2022 |
| | | | | EP | 4130459 | A1 | 08 February 2023 |
| | | | | CA | 3177600 | A1 | 06 January 2022 |
| CN | 102797629 | A | 28 November 2012 | None | | | |
| CN | 111075651 | A | 28 April 2020 | None | | | |
| CN | 113027695 | A | 25 June 2021 | None | | | |
| US | 2009295159 | A1 | 03 December 2009 | WO | 2007123552 | A1 | 01 November 2007 |
| | | | | EP | 2035899 | A1 | 18 March 2009 |
| | | | | US | 8174136 | B2 | 08 May 2012 |